# EUROPEAN PATENT APPLICATION

(11) **EP 2 392 289 A1**
(43) Date of publication of application: **07.12.2011**
(21) Application number: 10185907.2
(22) Date of filing: 01.10.2010
(51) Int. Cl.: A61C 8/00

(54) **Restorable one piece implant**

(30) Priority: 04.06.2010 TW 099210638
(71) Applicant: Chen, Chun-Leon, Las Vegas, NV 89146 (US)
(72) Inventor: Chen, Chun-Leon, Las Vegas, NV 89146 (US)
(74) Representative: Graf Glück Habersack Kritzenberger

(57) **Abstract**

A restorable one piece implant (10) includes an implant root (11) having a bottom coarse thread portion (111) for mounting in the gum (20) of a patient and a top fine thread portion (112) at the top side of the bottom coarse thread portion (111), an abutment (12) formed integral with the top end of the top fine thread portion (112) of the implant root for the mounting of a crown (30), and a through hole (13) extending vertically downwardly from the topmost edge of the abutment (12) into the implant root (11) to a predetermined depth above the bottom end of the bottom coarse thread portion (111) of the implant root (11) such that when the abutment (12) breaks accidentally or after a long use, the through hole (13) provides a space for the application of post and core technology to embed a post (14) in the broken abutment (12) in restoring the abutment (12).

## Description

### BACKGROUND OF THE INVENTION

### 1. Field of the Invention:

The present invention relates to a new structural design of one piece implant and more particularly, to a restorable one piece implant

### 2. Description of the Related Art:

Conventionally, dental implant surgery is to embed an implant into the patient's gum, and then to fasten an abutment to the top side of the implant with a screw, and then install a crown to the abutment after the wound is healed.

Nowadays, one piece implant design is available. A one piece implant has the implant and the abutment made in one piece, facilitating dental implant surgery.

Further, post and core technology has been intensively used in dental surgery. If the tooth structure is insufficient for the installation of a crown due to structural damage, spoil or breaking, post and core technology can be employed to restore the tooth structure for the installation of a crown. However, post and core technology has not yet been used in implant root structure.

After a long use or improper use of an implanted one piece implant with a crown, the abutment may break, causing disconnection of the crown from the gum. At this time, the abutment becomes not usable. When this problem occurs, the implant may have to be removed from the gum for reinstall. Under this situation, reinstallation of the dental implant may fail.

Therefore, it is desirable to provide a one piece implant that eliminates the aforesaid problem.

### SUMMARY OF THE INVENTION

The present invention has been accomplished under the circumstances in view. It is one object of the present invention to provide a one piece implant that is restorable.

To achieve this and other objects of the present invention, a restorable one piece implant comprises:
an implant root having a bottom coarse thread portion and a top fine thread portion; and
an abutment formed integral with one end of the top fine thread portion of the implant root remote from the bottom coarse thread portion for the mounting of a crown;
wherein a through hole extends vertically downwardly from the topmost edge of the abutment through the length of the abutment into the implant root to a predetermined depth above the bottom end of the implant root such that when the abutment breaks accidentally or after a long use, the through hole provides a space for the application of post and core technology to embed a post in the broken abutment in restoring the abutment.

### BRIEF DESCRIPTION OF THE DRAWINGS

FIG. 1 is an elevational view of a restorable one piece implant in accordance with the present invention.
FIG. 2 is a side plain view of the restorable one piece implant in accordance with the present invention.
FIG. 2A is a sectional view taken along line A-A of FIG. 2.
FIG. 3 is a schematic drawing of the present invention, showing the restorable one piece implant installed in the gum.
FIG. 4 is a schematic drawing of the present invention, showing the restorable one piece implant installed in the gum and a crown affixed to the abutment of the one piece implant.
FIG. 5 is a schematic drawing of the present invention, showing the abutment of the restorable one piece implant broken.
FIG. 6 is a schematic drawing of the present invention, showing the broken restorable one piece implant restored subject to post and core technology.

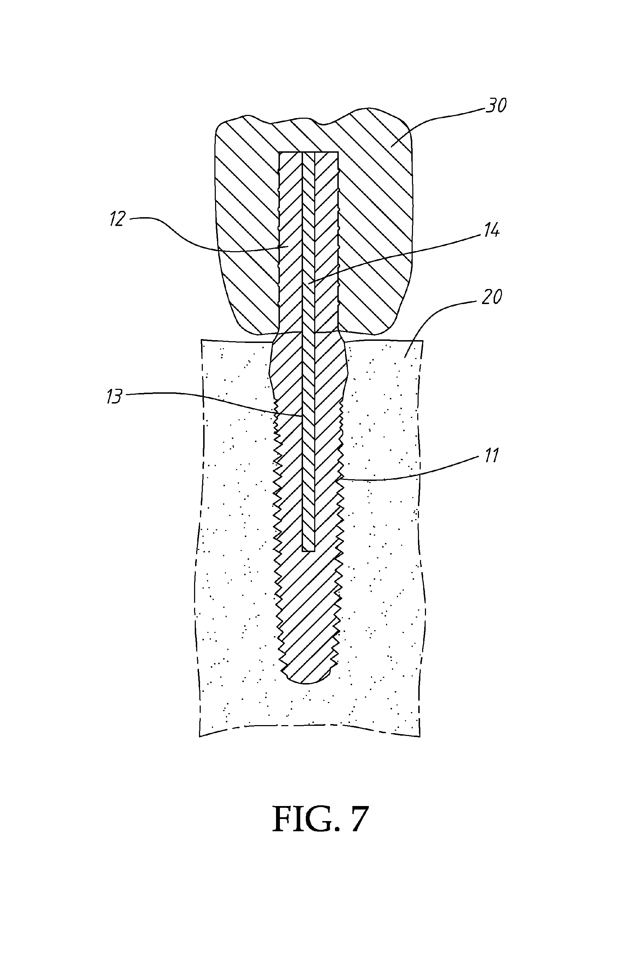

FIG. 7 corresponds to FIG. 6, showing a crown affixed to the abutment of the restored one piece implant.

### DETAILED DESCRIPTION OF THE PREFERRED EMBODIMENT

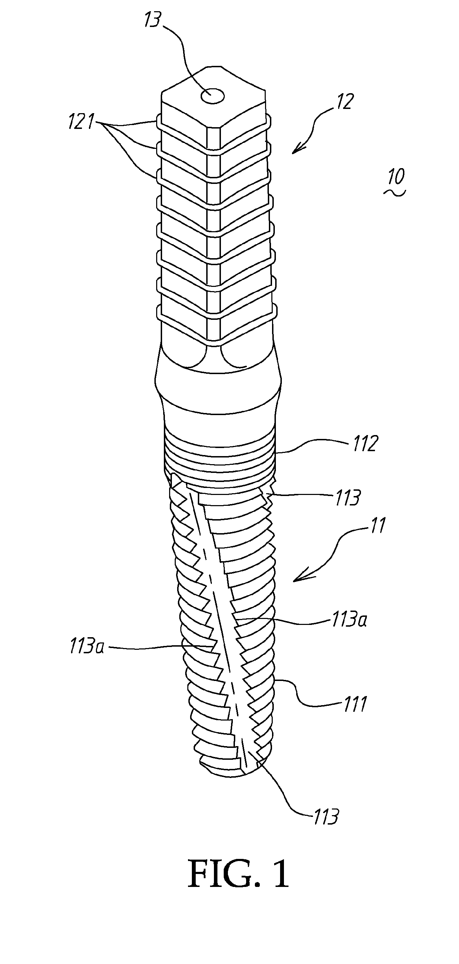

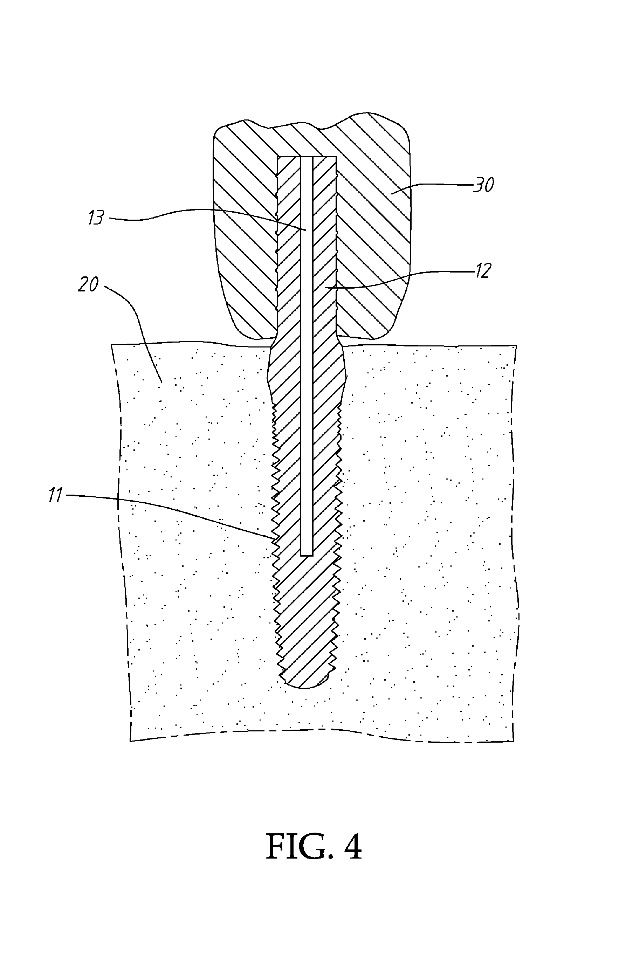

Referring to FIGS. 1~3, a restorable one piece implant **10** in accordance with the present invention is shown comprising an implant root **11** that has a coarse thread portion **111** at the bottom side that can be driven into the gum of a patient and a fine thread portion **112** at the top side of the coarse thread portion **111,** and an abutment **12** formed integral with top end of the fine thread portion **112** of the implant root **11** for supporting a crown **30,** as shown in FIG. 4. The coarse thread portion **111** has a plurality of spiral grooves **113** spirally cut through the periphery thereof, and a cutting edge **113a** longitudinally extending along each of the two opposite lateral sides of each of the spiral grooves **113.** The abutment **12** has a plurality of ribs **121** protruded from the periphery thereof and disposed at different elevations.

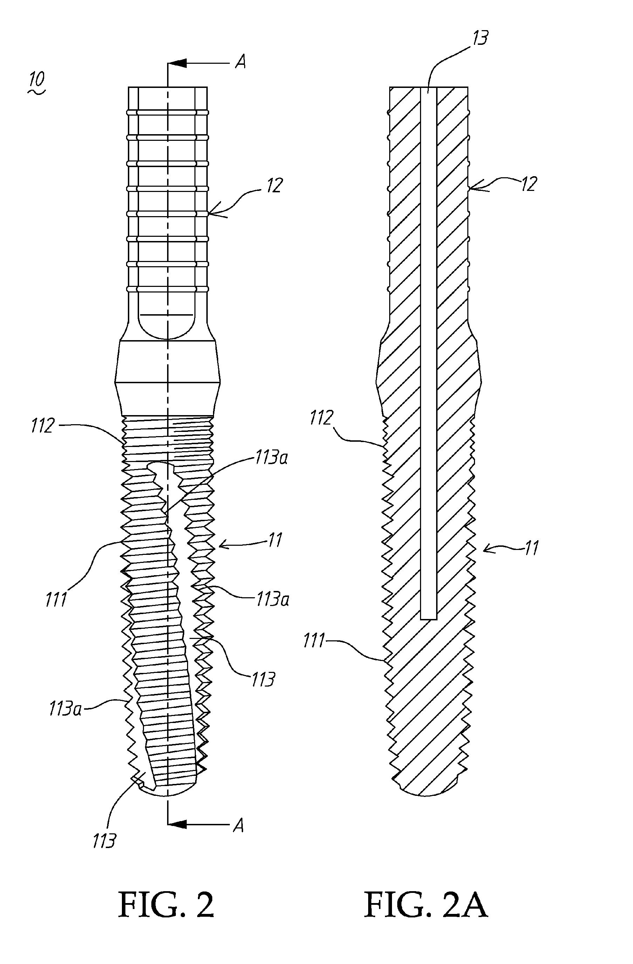

Referring to FIG. 2A, the restorable one piece implant **10** further has a through hole **13** vertically downwardly extending from the topmost edge of the abutment **12** into the implant root **11** to a predetermined depth close to the bottom end of the implant root **11.**

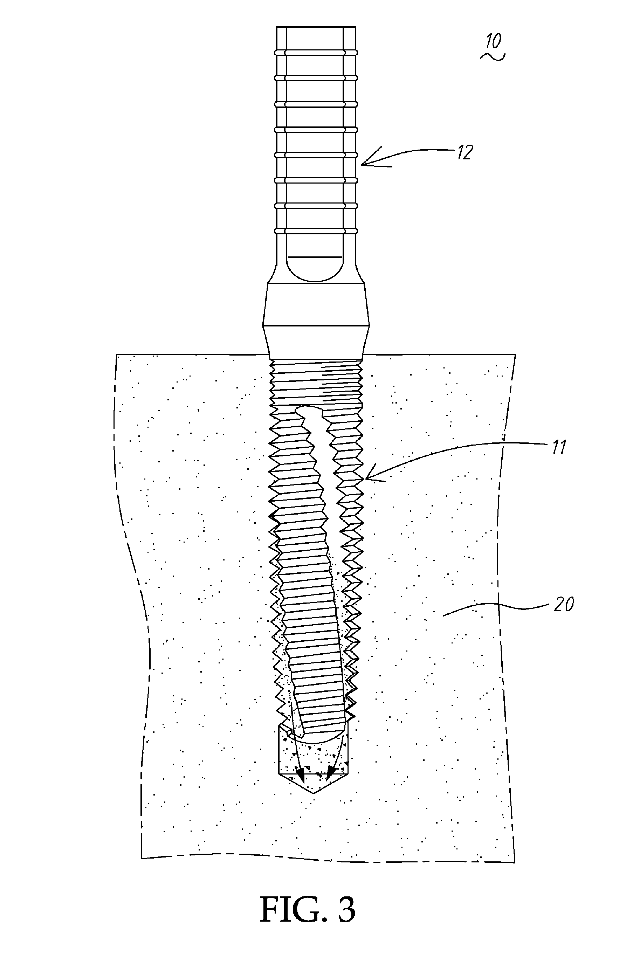

When in use, as shown in FIG. 3, a high-speed hand tool is used to drive the implant root **11** into the patient's gum **20.** At this time, the cutting edges **113a** of the spiral grooves **113** of the implant root **11** cut the bone structure in the gum **20,** enabling the separated bone tissues to be expelled toward the inside of the gum **20,** as indicated by the arrowhead signs. When matching with sinus lift, the separated bone tissues can be pushed into the sinus cavity. By means of the design of the spiral grooves **113,** bone powder can be conveniently filled into the inside of the gum **20** around the implant root **11** during implant surgery.

After the wound is healed, a crown **30** can then be affixed to the abutment **12,** as shown in FIG. 4, finishing the dental implant surgery.

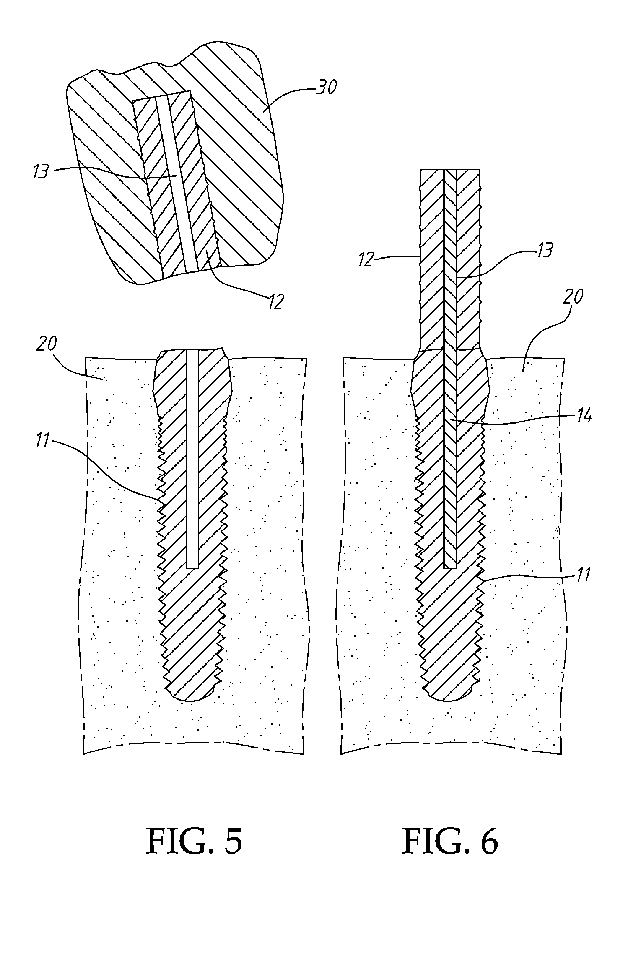

Referring to FIG. 5, after a long use or an improper use of the crown **30,** the abutment **12** may break, causing disconnection of the crown **30** from the gum **20.** At this time, as shown in FIG. 6, post and core technology can be employed to embed a post **14** in the through hole **13,** thereby restoring the abutment **12.** Thus, the crown **30** can be affixed to the abutment **12** again.

By means of the through hole **13** in the one piece implant **10** and the use of post and core technology, the broken abutment **12** can be restored. Thus, the invention shows a better effect when compared to conventional one piece implants.

Although a particular embodiment of the invention has been described in detail for purposes of illustration, various modifications and enhancements may be made without departing from the spirit and scope of the invention. Accordingly, the invention is not to be limited except as by the appended claims.

## Claims

1. A restorable one piece implant (10) comprises:
an implant root (11) having a coarse thread portion (111) disposed at a bottom side thereof for installation in the gum (20) of a patient and a top fine thread portion (112) disposed at a top side of said coarse thread portion (111); and
an abutment (12) formed integral with one end of said fine thread portion (112) of said implant root remote from said coarse thread portion (111) for the mounting of a crown (30);
wherein a through hole (13) extends vertically downwardly from the topmost edge of said abutment (12) through the length of said abutment (12) into said implant root (11) to a predetermined depth above the lowest edge of said implant root (11) such that when said abutment (12) breaks accidentally or after a long use, said through hole (13) provides a space for the application of post and core technology to embed a post (14) in the broken abutment (12) in restoring the abutment (12).

2. The restorable one piece implant (10) as claimed in claim 1, wherein said implant root (11) comprises a plurality of spiral grooves (113) extending around the periphery thereof and a cutting edge (113a) extending longitudinally along each of two opposite lateral sides of each of said spiral grooves for cutting the bone structure in the gum (20) of the patient for enabling the separated bone tissues to be expelled toward the inside of the gum (20) of the patient when said implant root (11) is being driven into the gum (20) of the patient.
